(19) Europäisches Patentamt
European Patent Office
Office européen des brevets

(11) **EP 4 172 539 B1**

(12) **EUROPEAN PATENT SPECIFICATION**

(45) Date of publication and mention
of the grant of the patent:
**03.04.2024 Bulletin 2024/14**

(21) Application number: **21751613.7**

(22) Date of filing: **23.06.2021**

(51) International Patent Classification (IPC):
**F25B 49/00** (2006.01)  **F24F 11/36** (2018.01)
**F24F 11/89** (2018.01)  **G01N 21/64** (2006.01)
**F24F 110/76** (2018.01)

(52) Cooperative Patent Classification (CPC):
**F25B 49/005; F24F 11/36; F24F 11/89;** F24F 11/52;
F24F 2110/76; F25B 2500/222; F25B 2600/2525;
G01N 21/643; Y02B 30/70

(86) International application number:
**PCT/IB2021/055560**

(87) International publication number:
**WO 2021/260588 (30.12.2021 Gazette 2021/52)**

(54) **MONITORING APPLIANCE FOR DETECTING LEAKS OF A REFRIGERANT FLUID FROM A SAFETY VALVE OF AN INDUSTRIAL REFRIGERATION SYSTEM, AND USE THEREOF**

ÜBERWACHUNGSGERÄT ZUR ERKENNUNG VON LECKAGEN EINER KÜHLFLÜSSIGKEIT AUS EINEM SICHERHEITSVENTIL EINER INDUSTRIELLEN KÄLTEANLAGE SOWIE VERWENDUNG DESSELBEN

APPAREIL DE SURVEILLANCE POUR DÉTECTER DES FUITES D'UN FLUIDE FRIGORIGÈNE PROVENANT D'UNE SOUPAPE DE SÉCURITÉ D'UN SYSTÈME DE RÉFRIGÉRATION INDUSTRIEL, ET UTILISATION D'UN TEL APPAREIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2020 IT 202000015214**

(43) Date of publication of application:
**03.05.2023 Bulletin 2023/18**

(73) Proprietor: **CO-REF S.R.L.**
**20060 Pessano con Bornago (MI) (IT)**

(72) Inventors:
• **CORCIONE, Mario**
**20060 Pessano Con Bornago, Milano (IT)**
• **BAGGIOLI, Mattia**
**20060 Pessano Con Bornago, Milano (IT)**

(74) Representative: **Pennacchio, Salvatore Giovanni et al**
**Jacobacci & Partners S.p.A.**
**Via Senato, 8**
**20121 Milano (IT)**

(56) References cited:
**EP-A1- 3 396 345**       **EP-A1- 3 879 202**
**JP-A- 2011 214 730**   **US-A1- 2005 269 419**

• **MCDOWELL G R ET AL: "A robust and reliable optical trace oxygen sensor", PROCEEDINGS OF SPIE; [PROCEEDINGS OF SPIE ISSN 0277-786X VOLUME 10524], SPIE, US, vol. 10231, 16 May 2017 (2017-05-16), pages 102310T-102310T, XP060090746, DOI: 10.1117/12.2265561 ISBN: 978-1-5106-1533-5**
• **Nn: "Datasheet: Luminox, fluorescence-based optical oxygen sensor", , 31 December 2011 (2011-12-31), pages 1-2, XP055304138, Retrieved from the Internet: URL:http://www.gassensor.ru/data/files/oxy gen/LuminOx_O2_optical.pdf [retrieved on 2016-09-20]**

**Description**

TECHNOLOGICAL BACKGROUND OF THE INVENTION

Field of application

The present invention relates in general to systems for detecting leaks of a refrigerant in industrial refrigeration systems.

In particular, the invention relates to a monitoring appliance for detecting leaks of a refrigerant fluid, such as a refrigerant gas, from a refrigeration circuit, with particular reference to small leaks or seepages of pressurized refrigerant fluid from a safety valve of the refrigeration system.

The invention furthermore also relates to the use of such an appliance. I

Prior art

As is known, an industrial refrigeration system employing a pressurized refrigerant fluid comprises one or more safety valves. The function performed by a safety valve is that of protecting the system equipment, such as evaporator units, capacitors, liquid receivers, oil separators, displacement compressors, heat exchangers and simple pressure receivers, from possible conditions of overpressure which may be generated in the system itself with respect to the operating conditions for which such equipment was designed.

The safety valve opens when conditions are exceeded for which the valve was calibrated, i.e. when the thrust applied on the shutter by the pressurized fluid exceeds the force countering the spring acting on the shutter itself.

The most common safety valves ensure the repeatability of the intervention. This means that the initial calibrating conditions are automatically restored after a valve has intervened following an overpressure to protect the system equipment, i.e. after the same has opened and then closed again.

Nevertheless, manufacturers recommend replacing or servicing safety valves after they have intervened. Indeed, during the opening step, processing residuals of the components and the pipes may have accumulated on the valve gasket itself. Such effects may in the long run deteriorate or make the sealing of the valve defective upon reclosing.

An incorrect sealing of the safety valve may cause small leaks of the pressurized refrigerant fluid or seepages from the system through the defective valve. Such small seepages of refrigerant constitute leaks of the refrigerant which are difficult to detect and although they are minimal, they may in the long run cause the emptying of the refrigeration circuit with subsequent economic, environmental damage and harm to the people operating in the vicinity of the refrigeration system.

Moreover, an operator is often forced to inspect all the safety valves in the system to identify that on which such leaks are occurring, with subsequent waste of time and resource.

According to the system operating conditions and the type of refrigerant fluid used, once open, the safety valves may exhaust the refrigerant fluid directly into the surrounding environment or, in the cases in which there is the risk of causing direct harm to people in the vicinity, a pipe or duct is provided for conveying the exhausted refrigerant fluid which is sized so as not to jeopardize the operation of the valve itself. Generally, the safety standards for refrigeration systems recommend implementing each valve in the system with an exhaust pipe for the refrigerant fluid placed at the output or downstream of the valve itself.

Certain technical solutions for detecting the possible malfunctioning of a safety valve of a refrigeration system employed today aim to detect overpressure conditions to which the valve may be subjected. Among these solutions, burst discs are probably the most used system. This involves diaphragms placed upstream of the safety valve and calibrated to intervene by bursting following overpressures in the refrigeration circuit which are smaller than the overpressures which would cause the valve to open. When the pressure in the refrigeration circuit reaches the limit set for the intervention of the disc, such a disc bursts and a pressure transmitter (or a pressure switch) installed downstream of the disc sends an analog signal (or a digital contact) to the control system.

Therefore, the burst disc allows to detect the changes in pressure in the refrigeration circuit, thus signaling the risk that a leak of a refrigerant fluid may occur at a defective safety valve. However, such burst discs do not allow to detect an actual fluid leak because they do not provide information on the actual operating conditions of the valve.

Moreover, once they have intervened, burst discs cannot be used again and are to be replaced. Moreover, they are to be periodically inspected. In order to do this, there is a need for direct intervention on the refrigeration circuit, thus stopping the operability of the system.

Generally, a monitoring system determining the oxygen concentration is disclosed by MCDOWELL G R ET AL: "A robust and reliable optical trace oxygen sensor",PROCEEDINGS OF SPIE; [PROCEEDINGS OF SPIE ISSN 0277-786X VOLUME 10524], SPIE, US, vol. 10231, 16 May 2017.

SUMMARY OF THE INVENTION

It is the object of the present invention to devise and provide a monitoring appliance which allows to detect leaks of a refrigerant fluid from a refrigeration circuit, in particular the seepages of a refrigerant fluid from a safety valve of an industrial refrigeration system, thus at least partially overcoming the limits and drawbacks mentioned above in relation to the known solutions, for example the limits associated with the employment of burst discs.

Such an object is achieved by a monitoring appliance for detecting leaks of a refrigerant fluid, such as a refrigerant gas, from a refrigeration circuit of an industrial refrigeration system according to claim 1.

The invention thus relates to a monitoring appliance (100) for detecting leaks of a refrigerant fluid from a refrigeration circuit (150) of an industrial refrigeration system, which inter alia comprises: - an electronic detection device (10) for detecting leaks of a refrigerant fluid, I

- a body (1) having a first portion (2) for accommodating an electronic detection device (10) for detecting leaks of a refrigerant fluid, said first portion (2) being connected to an opposite second portion (3) of the body,

said second portion (3) of the body comprises mechanical connection means (30) configured to connect the monitoring appliance to an exhaust pipe (60; 70) of the refrigerant fluid, associated with at least one safety valve (40; 50) of the refrigeration system,

wherein said electronic detection device (10) comprises:

- an optical oxygen sensor (11) adapted to detect a decrease in an oxygen level below a first and a second preset threshold value inside the exhaust pipe, from a reference oxygen level value, caused by a leak of a refrigerant fluid from the safety valve (40; 50) into the exhaust pipe (60; 70);
- an electronic control unit (12) connected to said optical oxygen sensor (11);
- an electronic status switching unit (13) which can be activated by the electronic control unit (12) to switch from a first (OFF) to a second (ON) status to signal the detection of a decrease in the oxygen level in the exhaust pipe (60, 70) below said first or second preset threshold value,

exceeding said first threshold value identifies a leak of a refrigerant fluid from the safety valve (40; 50) which enables monitoring the valve, exceeding said second threshold value identifies a leak of a refrigerant fluid from the safety valve (40; 50) which enables a valve replacement operation.

In particular, the invention provides a monitoring appliance for detecting leaks of a refrigerant, which is configured to be connected to an exhaust pipe of the refrigerant fluid associated with at least one safety valve of the refrigeration system and separate from the refrigeration circuit. Such an arrangement facilitates servicing the monitoring appliance because there is no need for interventions on such an appliance or the replacement of the same in order to intercept parts of refrigeration circuit or to create a vacuum in the system.

It is a further object of the invention to provide a monitoring appliance provided with mechanical means for the reversible connection to the exhaust pipe of the refrigerant fluid which facilitates and speeds up the installation operations of the monitoring appliance.

Preferred embodiments of such a monitoring appliance are described in the dependent claims.

The present invention also relates to a safety valve assembly for an industrial refrigeration system which includes the aforesaid monitoring appliance according to claim 13 and to the use of such an appliance according to claim 16.

BRIEF DESCRIPTION OF THE DRAWINGS

Further features and advantages of the monitoring appliance for detecting leaks of a refrigerant fluid according to the invention will become apparent from the following description of preferred embodiments thereof, given only by way of a non-limiting, indicative example, with reference to the accompanying drawings, in which:

- **Figure 1** diagrammatically shows an exploded view of a first embodiment of a safety valve assembly including the monitoring appliance for detecting leaks of a refrigerant fluid from the valve of the invention;
- **Figure 2** diagrammatically shows the safety valve assembly in Figure 1, in assembled configuration;
- **Figure 3** diagrammatically shows an exploded view of a second embodiment of a safety valve assembly including the monitoring appliance for detecting leaks of a refrigerant fluid from the valve of the invention;
- **Figure 4** diagrammatically shows the safety valve assembly in Figure 3, in assembled configuration;
- **Figure 5** shows a block diagram of an electronic device for detecting leaks of a refrigerant fluid included in the monitoring appliances in Figures 1 to 4. In the aforesaid figures, equal or similar elements will be indicated by the same reference numerals.

DETAILED DESCRIPTION OF PREFERRED EMBODIMENTS

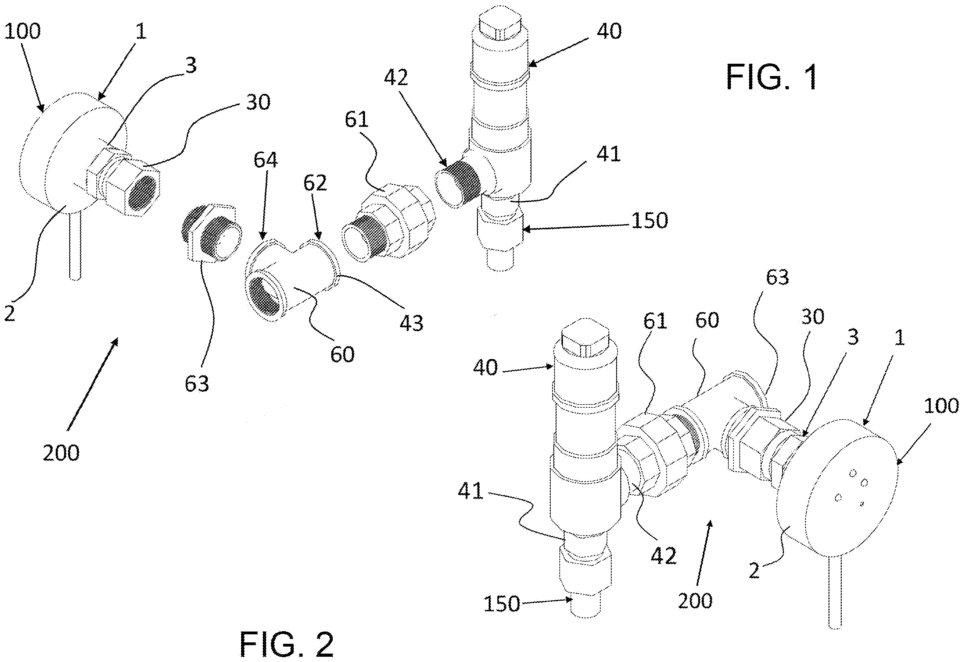

With reference to Figures 1 to 4, a monitoring appliance for detecting leaks of a refrigerant fluid from a refrigeration circuit 150 of an industrial refrigeration system according to the present invention, the invention being defined by appended claim 1, is indicated by reference numeral 100.

Such a monitoring appliance 100, hereinafter also simply appliance, particularly allows to detect small leaks of the pressurized refrigerant fluid or seepages of a refrigerant fluid from a safety valve 40, 50 of an industrial refrigeration system. Such a refrigerant fluid is for example a refrigerant gas, such as carbon dioxide, propane, freon, ammonia.

Additionally, the monitoring appliance 100 is also configured to detect the opening of the safety valve 40, 50 following an overpressure in the refrigeration circuit 150.

The monitoring appliance 100 comprises a body 1 having a first portion 2 for accommodating an electronic detection device 10 for detecting leaks of a refrigerant fluid. Such a first portion 2 of the body of the appliance is connected, in particular is connected in one piece, to an opposite second portion 3 of the body.

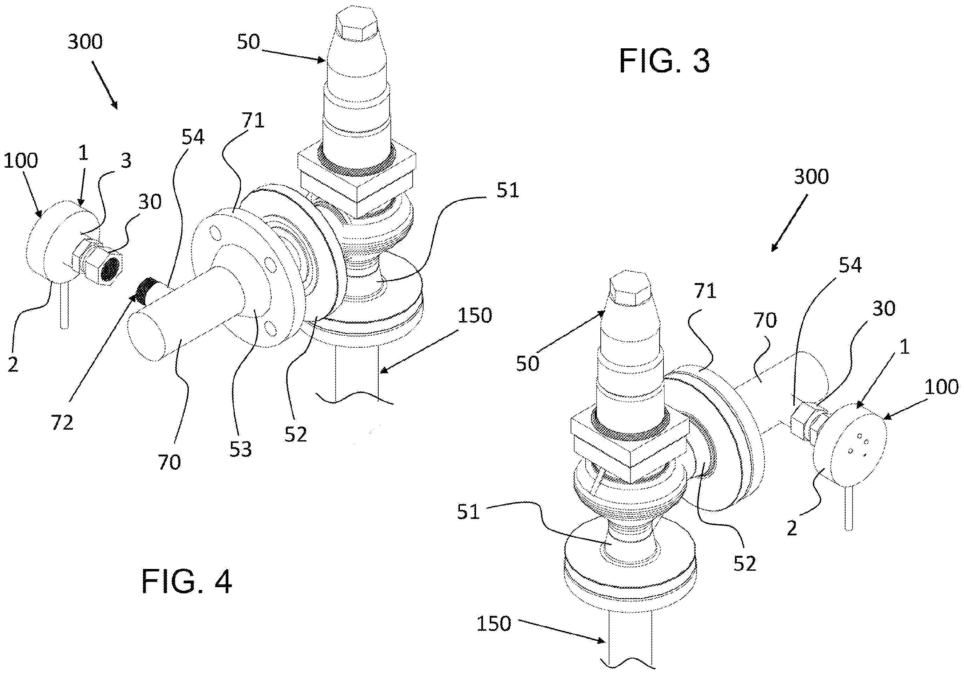

With reference to Figures 2 and 4, the second portion 3 of the body of appliance 100 comprises mechanical connection means 30 configured to connect the monitoring appliance 100 to an exhaust pipe 60, 70 of the refrigerant fluid, associated with at least one safety valve 40, 50 of the refrigeration system and separate from the refrigeration circuit 150.

Moreover, the aforesaid electronic detection device 10 comprises an optical oxygen sensor 11 adapted to detect a decrease in an oxygen level in the exhaust pipe below at least one preset threshold value, caused by a leak of a refrigerant fluid in the exhaust pipe 60, 70. The decrease, in particular percentage decrease, of the level of oxygen in the pipe is detected starting from a reference oxygen level value corresponding to a normal operating condition of the safety valve, i.e. in the absence of leaks.

In particular, the optical oxygen sensor 11 is adapted to detect a decrease in the oxygen level in the exhaust pipe 60, 70 below a first and a second preset threshold value, from a reference oxygen level value, caused by a leak of a refrigerant fluid from the safety valve 40, 50 into the exhaust pipe 60, 70.

Exceeding the first threshold value identifies a leak of a refrigerant fluid from the safety valve 40, 50 which enables monitoring the valve. Exceeding the second threshold value identifies a leak of a refrigerant fluid from the safety valve 40, 50 which enables a valve replacement operation.

In an embodiment, the electronic detection device 10 for detecting leaks of a refrigerant fluid materializes in a printed circuit board (PCB). The optical oxygen sensor 11 is mounted on such a circuit board 10.

For example, such a first threshold value identifies a percentage decrease in the oxygen in pipe 60, 70 caused by a small leak or seepage of a refrigerant fluid, for example a fluid leak of 5% in volume (Warning) in the pipe. Once signaled, this small leak generally does not require intervention on valve 40, 50 if it is sporadic.

Moreover, such a second threshold value identifies a significant percentage decrease in the oxygen in the pipe 60, 70 caused by a considerable leak of a refrigerant fluid or by seepage which continues over the long run, in the pipe through a defective valve, for example a fluid leak of 15% in volume (Alarm) in the pipe. Exceeding such a second threshold value is indicative of a defect in the sealing of the safety valve 40, 50 which requires servicing or replacing valve 40, 50 itself to prevent the emptying of the refrigeration circuit 150.

The present invention allows to define a first and a second threshold value, allowing to discriminate between a decrease in oxygen caused by simple seepage of the safety valve (first threshold) and a decrease in oxygen in the exhaust pipe caused by a significant leak of a refrigerant fluid (second threshold).

This ensures increased efficiency and reliability of the monitoring appliance 100 which allows to discriminate the operating conditions of the valve not requiring a replacement operation of the valve itself from those requiring such a replacement due to the defectiveness of the safety valve.

The fact that the monitoring appliance 100 of the invention detects the leaks of a refrigerant gas through an analysis by "subtraction" makes it adapted to installation in systems operating with any type of a refrigerant gas, in addition to those indicated above. Such gases also comprise potentially explosive gases with which only products conforming with the ATEX (ATmosphère Explosible) standard may be used. In particular, the ATEX standard groups together all the electrical/electronic and mechanical appliances and the protection devices found in environments at the risk of explosion.

For example, the optical oxygen sensor 11 consists of a florescent optical sensor, such as the compact oxygen sensor indicated by the trade name LuminOxO2 by SST Sensing Ltd., operating with a supply voltage of 4.5V-5.5V, in a range of temperatures from -30°C to +60°C, provided with a TTL (transistor-transistor logic) digital output and response time under 30 msec.

In this embodiment, the aforesaid mechanical connection means 30 of the appliance configured to connect the monitoring appliance 100 to the exhaust pipe 60, 70 of the refrigerant fluid are mechanical connection means of reversible type.

In greater detail, such reversible mechanical connection means consist of a push-in connector 30 with threaded coupling associated with the connection portion 3 of the monitoring appliance 100. For example, such a threaded coupling is a 1" coupling.

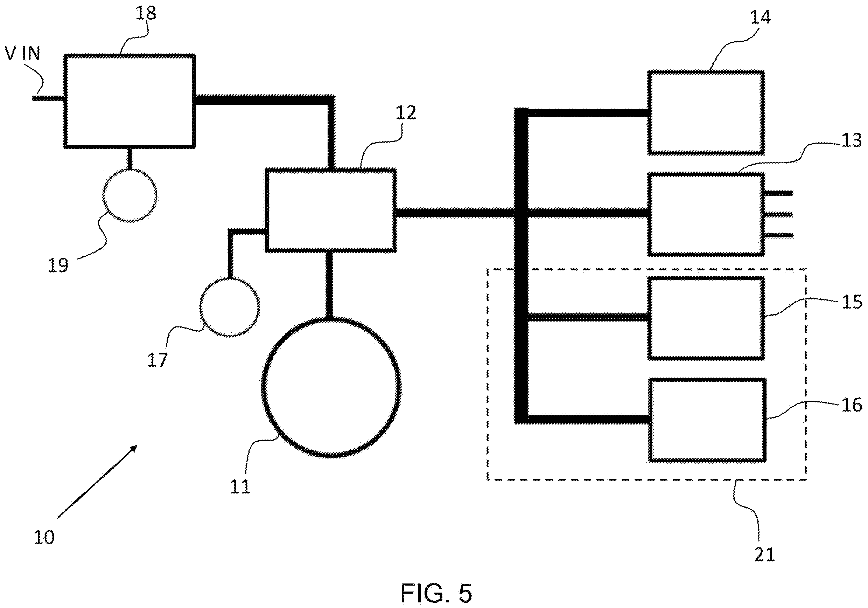

In a more general embodiment which may be described with reference to Figure 5, in addition to the optical oxygen sensor 11, the electronic detection device 10 for detecting leaks of a refrigerant fluid comprises:

- an electronic control unit 12 connected to such an optical oxygen sensor 11 for receiving a digital voltage signal representative of a level or amount of oxygen detected in the exhaust pipe 60, 70;
- an electronic status switching unit 13 which can be activated by the electronic control unit 12 to switch from a first (OFF) to a second (ON) status to signal the detection of a (percentage) decrease in the oxygen level in the exhaust pipe 60, 70 below at least one preset threshold value, for example the first threshold value or the second threshold value mentioned above.

In particular, the electronic control unit 12 comprises a microcontroller, for example 8 bits operating at 8 MHz, equipped with a respective storage, for example of the volatile type, for storing data, and possibly with a system storage of non-volatile type (for example of EEPROM type).

Both the electronic control unit 12 and the optical oxygen sensor 11 are supplied, for example at a voltage of 5V, by a direct current (DC) voltage supply block 18 starting from an input voltage $V_{IN}$ of 24V (minimum 12V - maximum 30V). The voltage supply to the electronic components of the detection device 10 is signaled by the activation of a respective light signal 19, for example a green LED turns ON.

In order to be adapted to installation on refrigeration circuits operating with potentially explosive gases, the monitoring appliance 100 of the invention comprises suitable over-current, short-circuit, overvoltage and electrostatic discharge protections. Such protections allow the optical oxygen sensor 11 to operate in contact with such gases despite it not originally being adequate for this function.

In particular, the monitoring appliance 100 comprises a first fuse, such as a 200mA fuse, of the resettable type, connected in series to the power supply of the circuit board 10 to limit the current in case of short circuits in the power supply. In particular, such a first fuse is connected between the input voltage terminal $V_{IN}$ and the voltage supply block 18 of the electronic detection device 10.

Moreover, the monitoring appliance 100 comprises a first resistance, such as a 22Ω resistance, connected between the electronic control unit 12 and the optical oxygen sensor 11 to limit the current to the oxygen sensor 11 in case of a short circuit of the latter. Additionally, to prevent the superheating of such a first resistance, the monitoring appliance 100 comprises a second fuse, such as a 125mA fuse, connected on the output line of the voltage supply block 18.

It should be noted that the value of such a first resistance is selected to have a maximum drop of 500 mV thereon so as to provide the optical oxygen sensor 11 with at least a 4.5V supply voltage, which is the minimum voltage for correct operation. Indeed, by selecting such a first resistance equal to 22Ω, the currents involved in the monitoring appliance 100 cause a maximum drop in voltage on such a first resistance of about 440 mV. Therefore, in the worst case, the supply voltage of the oxygen sensor 11 is equal to about 5V - 0.44V = 4.56V.

Additionally, the monitoring appliance 100 comprises a second and a third resistance, for example equal to each other and having value of 330Ω, connected in series on the signal communication line connecting the electronic control unit 12 and the oxygen sensor 11. Such second and third resistances further protect PCB 10 and the optical oxygen sensor 11 in case of malfunctioning.

It should be noted that the electronic status switching unit 13 of the electronic detection device 10 is selected from the group consisting of:

- an electromechanical relay, for example including three contacts (NO - C - NC) or only 2 contacts (NO - C);
- a P-channel power MOSFET transistor;
- an N-channel power MOSFET transistor;
- a solid state relay.

At the discretion of the user and always while respecting the technical features of the device, the electronic switching unit 13 implemented with relays may be interfaced with a control system (PLC, controllers, and the like) in which a logic for generating signals and/or alarms may be implemented upon switching the relay.

In the more general embodiment, the electronic detection device 10 further comprises a data communication unit 14 connected to the electronic control unit 12, for sending, out from the monitoring appliance 100, data representative of the performed detections of leaks of a refrigerant gas and for receiving, in the monitoring appliance 100, configuration instructions for operating parameters of the optical oxygen sensor 11.

In particular, such a data communication unit 14 is a fieldbus line operating according to a communication protocol selected from the group consisting of: Modbus RTU, Modbus TCP, Profinet, Profibus, CAN bus.

In a different embodiment of the monitoring appliance 100 of the invention, the electronic detection device 10 may also comprise an analog current output unit 15, for example 4-20 mA, configured to connect the monitoring appliance 100 to an external control system.

For example, such an external control system may comprise electronic controllers, PLCs (Programmable Logic Controllers) or third-party devices capable of executing any alarm procedures.

In a different embodiment of the monitoring appliance 100 of the invention, the electronic detection device 10 may also comprise an analog voltage output unit 16 alternatively to the analog current output 15. Such a voltage output 16, for example of 0-10V, is configured to connect the monitoring appliance 100 to the above-mentioned external control system.

In a different embodiment again of the monitoring appliance 100 of the invention shown in Figure 5, the electronic detection device 10 may comprise both an analog voltage output unit 16 and an analog current output unit 15, both enclosed in the dotted block 21.

To protect from any short-circuit loads, the monitoring appliance 100 of the invention comprises third resettable fuses, such as 50 mA fuses, operatively associated with the analog voltage output unit 16 and the analog current output unit 15.

Again, to protect from any short-circuit loads, the monitoring appliance 100 also comprises fourth resettable fuses, such as 200 mA fuses, operatively associated with the data communication unit 14.

Moreover, the monitoring appliance 100 comprises two-way TVS diodes, such as 1.5kW diodes, for limiting any over-voltages, and Schottky diodes for limiting any electrostatic discharges and polarity reversals. Such diodes are associated with blocks 18, 13, 14, 15 and 16 in Figure 5 to protect the input signals, the output and supply signals of the monitoring appliance 100 from the aforesaid over-voltages or electrostatic discharges.

Since it comprises all the above-mentioned protections, the monitoring appliance 100 of the invention meets the requirements required by the ATEX standard and may be employed in environments at the risk of explosion.

Moreover, a bi-component resin adapted to cover and incorporate the circuit board 10 inserted into body 1 is employed to manufacture the monitoring appliance 100. Such a resin is selected from resins having features of resistance to heat and to atmospheric and chemical deterioration which allow to protect the circuit board 10. With such a resin, the circuit board 10 is not affected by external heat sources up to a temperature of 135°C. Moreover, the resin protects the components of the circuit board 10 also in case of a breakdown or malfunction of one of them, thus ensuring one of the requirements required by the ATEX standard.

Moreover, in all the above-mentioned examples, the electronic detection device 10 comprises visual signaling means 17 of an alarm which can be activated by the electronic control unit 12 following the detection of a decrease in the level of oxygen in pipe 60, 70 below the preset threshold value, i.e. upon the detection of a leak of a refrigerant fluid which is greater than a respective first threshold (Warning) or greater than a respective second threshold (Alarm). Such visual signaling means 17 consist of an orange LED, which turns ON to signal the first threshold value (Warning) has been exceeded, and a red LED, which turns ON to signal the second threshold value (Alarm) has been exceeded.

With reference to Figures 1 to 4, a safety valve assembly 200, 300 of an industrial refrigeration system is described below. Such an assembly comprises:

- a safety valve 40, 50 having a respective inlet 41, 51 connected to a refrigeration circuit 150 of the industrial refrigeration system, and an outlet 42, 52 connected to an exhaust pipe 60, 70 of the refrigerant fluid;
- a monitoring appliance 100 for detecting leaks of a refrigerant fluid of the above-described present invention;
- first reversible mechanical connection means 61, 62, 71 associated with a first end 43, 53 of the exhaust pipe 60, 70 of the refrigerant fluid adapted to reversibly engage the aforesaid outlet 42, 52 of the safety valve 40, 50;
- second reversible mechanical connection means 63, 64, 72 associated with a second end 44, 54 of the exhaust pipe 60, 70 of the refrigerant fluid adapted to reversibly engage connection means 30 of the monitoring appliance 100.

With reference to the example of safety valve assembly 200 of an industrial refrigeration system in Figures 1 to 2:

- the first reversible mechanical connection means 61, 62 associated with the first end 43 of the exhaust pipe 60 of the refrigerant fluid comprise a first 61 and a second 62 push-in connector with threaded coupling;
- said second reversible mechanical connection means 63, 64 associated with the second end 44 of the exhaust pipe of the refrigerant fluid comprise a third 63 and a fourth 64 push-in connector with threaded coupling.

With reference to the example of safety valve assembly 300 of an industrial refrigeration system in Figures 3 to 4:

- the first reversible mechanical connection means 71 associated with the first end 53 of the exhaust pipe 70 of the refrigerant fluid comprise a push-in connector with flanged coupling;

-   the second reversible mechanical connection means 72 associated with the second end 54 of the exhaust pipe 70 of the refrigerant fluid comprise a push-in connector with threaded coupling.

From an operational viewpoint, the monitoring appliance 100 allows to monitor the percentage value of the amount of refrigerant gas in an exhaust pipe 60, 70 of the refrigerant fluid associated with one or more safety valves 40, 50 of the system by monitoring the percentage value of the oxygen levels in such an exhaust pipe.

In other words, a decrease in the oxygen in the exhaust pipe 60, 70 below the above-mentioned first threshold value from a reference oxygen level is indicated by appliance 100 as an increase in percentage value above a respective first threshold value of the amount of refrigerant gas in the same pipe of the refrigerant gas, or warning threshold (Warning) of the amount of refrigerant gas.

Moreover, a decrease in the oxygen in the exhaust pipe 60, 70 below the above-mentioned second threshold value from a reference oxygen level is indicated by appliance 100 as an increase in percentage value above a respective second threshold value of the amount of refrigerant gas in the same pipe of the refrigerant gas, or alarm threshold (Alarm) of the amount of refrigerant gas.

Following the detection by the optical oxygen sensor 11 of a decrease in the percentage level of oxygen in pipe 60, 70 from a reference level under normal conditions, such as to bring the percentage level of the amount of refrigerant gas above the respective first preset threshold value, for example the warning threshold value (Warning), or above the respective second preset threshold value, for example the alarm threshold value (Alarm), the monitoring appliance 100 is configured to signal, through the electronic control unit 12, the warning or alarm conditions and to locally activate the visual signaling 17 and simultaneously the electronic status switching unit 13.

Moreover, by means of the data communication unit 14 operating for example according to the MODBUS protocol, with which the monitoring appliance 100 is equipped, the values related to the percentage value of the amount of refrigerant gas detected in the exhaust pipe associated with valve 40, 50 may be read and the values related to the respective first percentage warning threshold value of refrigerant gas and the respective second alarm percentage threshold value of refrigerant gas may be written and changed in the monitoring appliance 100.

Moreover, the monitoring appliance 100 is also configured to detect the atmospheric pressure and the temperature of the environment. The value of this environmental data is written in specific Modbus registers.

In startup step (Startup), the LuminOx O2 sensor employed in appliance 100 requires at least 30 seconds to reach normal running. Such a startup time may be changed by means of a specific Modbus register. The set reference parameter generally is 40 seconds.

The monitoring appliance 100 updates the current and voltage output with a value which is proportional to the percentage amount of refrigerant gas measured both over the startup period and during the regular operation.

Once startup is complete, the device may signal the presence of a possible alarm or warning.

With reference to the voltage and current outputs 15, 16 described above, it should be noted that:

-   the 0V DC output is representative of a 0% change in the amount of refrigerant gas detected;
-   the 10V DC output is representative of a 100% change in the amount of refrigerant gas detected;
-   the 4mA output is representative of a 0% change in the amount of refrigerant gas detected;
-   the 20mA output is representative of a 100% change in the amount of refrigerant gas detected.

The switching unit 13 is configured by means of Modbus register, in particular in case of a relay. For example, the response configuration of relay 13 to an alarm is detailed below:

    STARTUP: N.O. contact not switched,
    OK STATUS: N.O. contact not switched,
    WARNING STATUS: N.O. contact not switched,
    ALARM STATUS: RELAY_ALARM_ENABLED= 1 -> N.O. contact switched,
    RELAY_ALARM_ENABLED= 0 -> N.O. contact not switched.

The following are certain parametrization registers of the monitoring appliance 100. In particular, the register

-   CURRENT_GAS: indicates the instantaneous gas value (%). The oxygen sensor 11 measures a percentage of oxygen in the range [0 - 25] % and the formula for measuring the gas in the pipe 60, 70 is:

$$GAS=(OXYGEN\_SET\_POINT - \text{``instantaneous oxygen''})*(100/ OXYGEN\_SET\_POINT)$$

where OXYGEN_SET_POINT is a parameter representative of a reference value of the level of oxygen in the pipe and "instantaneous oxygen" is a variable representative of the measurement taken through sensor 11.

Other parametrization registers of the monitoring appliance 100 comprise:

- CURRENT_TEMPERATURE: instantaneous temperature value (°C);
- CURRENT_PRESSURE: instantaneous pressure value (mbar);
- GAS_SET_POINT: The setpoint register is configured by the device once startup is complete.

The GAS_SET_POINT register may only be read in Modbus.

The register is updated also after the startup and only if the value CURRENT_OXYGEN > OXYGEN_SET_POINT;

- GAS_DELTA_WARNING: percentage of change of the GAS with respect to GAS_SET_POINT which may generate a Warning signal;
- CURRENT_GAS < (GAS_SET_POINT + GAS_DELTA_WARNING) -> OK,
- CURRENT_GAS > (GAS_SET_POINT + GAS_DELTA_WARNING)-> Warning signal,
- GAS_DELTA_ALARM: percentage of change of the GAS with respect to GAS_SET_POINT which may generate an Alarm signal,
- CURRENT GAS < (GAS_SET_POINT + GAS_DELTA_ALARM)-> OK,
- CURRENT_GAS > (GAS_SET_POINT + GAS_DELTA_ALARM) -> Alarm signal,
- GAS_STARTUP_ALARM: threshold value used to generate an alarm at the end of the startup step if:
- GAS_SET_POINT >= GAS_STARTUP_ALARM

This alarm cannot be cancelled; it is permanent. The device requires restarting to remove the alarm;

- STARTUP TIME: this register specifies the duration of the startup step; during this initial step, appliance 100 does not generate any warnings or alarms;
- RELAY_ALARM_ENABLED: relay signaling enabling

    0 -> relay disabled in case of an alarm,
    1 -> relay enabled in case of an alarm;

- ALARM_DETECTED: this register signals if the device has identified an alarm condition (register set to 1) ;

even if the device were to leave the alarm condition, the "flag" signaling of this register remains at 1.

Cancellation of the alarm: Modbus coding of 0 allows to reset the register status.

EXAMPLE

The Applicant has performed operating tests of the monitoring appliance 100 of the invention associated with a safety valve calibrated at a pressure of 20 bar, having an exhaust pipe with a diameter of 2.1/2" (DN65) installed in a system which employs carbon dioxide ($CO_2$) as refrigerant fluid. The seepage or opening of the valve may be monitored through appliance 100 by defining the following parameters.

1) Reference value for the type of fluid, the calibration pressure, and the dimensions of the safety valve, e.g. 416 grams of refrigerant leak per percentage point per minute, as per laboratory tests and indicated in Table 1 (values obtained in a laboratory at 25°C and 1013 mbar with approximation of +/- 10%) .

TABLE 1

| REFRIGERANT FLUID | Diameter of safety valve inlet tube | Diameter of safety valve outlet tube | Pressure in bar | Grams of refrigerant leak per % point per minute |
|---|---|---|---|---|
| $CO_2$ | 2" (DN50) | 2.1/2"(DN65) | 3 | 60 g |
| | | | 6 | 120 g |
| | | | 9 | 180 g |
| | | | 12 | 240 g |
| | | | 15 | 320 g |
| | | | 20 | 416 g |
| | | | 26 | 541 g |

2) Carbon dioxide system with total load of 8000 kg, where the end user has set the following threshold values for the refrigerant fluid leak (in percentage) from the valve:

- Warning threshold set by the user 20%;
- Alarm threshold set by the user 25%.

For refrigerant fluid leaks from the valve between 0 grams (0%) and 7904 grams (19%), the monitoring appliance 100 displays the leak percentage through the prepared outlets.

For refrigerant fluid leaks from the valve from 8320 grams (20%) up to 9984 grams (24%), the monitoring appliance 100 signals, through visual signaling and prepared outlets, a Warning status to warn of an occurrence which requires attention by appointed personnel.

For refrigerant fluid leaks from the valve greater than 10400 grams (25%), the monitoring appliance 100 signals the Alarm status, through visual signaling and possibly closing the Alarm relay, and where combined with a remote-monitoring system, sends an e-mail that an alarm has been triggered.

It should be noted that the user may program the thresholds according to the dimension of the monitored safety valve, the calibration pressure, the type of refrigerant fluid used and the position in which the monitoring appliance 100 is installed in the system.

The monitoring appliance 100 of the invention provides the advantage of promptly intervening if a safety valve 40, 50 opens or seeps so as to avoid dispersions of refrigerant gas into the environment, possible system stops, and to contribute to ensuring increased safety for the people who are in the vicinity of the system itself.

The monitoring appliance 100 also ensures installation and maintenance advantages. Indeed, by virtue of the 1" threaded coupling with which it is provided, appliance 100 may be easily installed on the conveying pipes of the exhausts of the safety valves 40, 50 of a system. Moreover, since it is installed downstream of the safety valve, appliance 100 is outside the refrigeration circuit 150, thus facilitating installation and possible maintenance operations because there is no need to either intercept parts of the circuit or to create a vacuum in the system.

As is known by those skilled in the art, appliance 100 always operates at room temperature and at a standard atmospheric pressure outside of the refrigeration circuit 150, independently of the system operating conditions. Moreover, the value of oxygen in the environment is always about 20.95% of the air mixture. This allows to use a single sensor for all the types of systems because, in case of a refrigerant gas leak, there will be a decrease in the percentage of oxygen regardless of the refrigerant gas used.

The monitoring appliance 100 of the invention also ensures detection accuracy and speed. As already mentioned, after the valve has intervened in the most common safety valves, i.e. it has opened and closed again to compensate for an overpressure, ensuring the complete restoration of the initial calibration condition of the valve itself is not possible.

An imperfect sealing of the valve may cause leaks of a refrigerant fluid into the environment which might not be identified by the fixed safety detectors installed in the system because such leaks often are insufficient to saturate the environment in which the refrigeration unit is located, but may empty the refrigeration circuit in the long run.

Contrarily, the monitoring appliance 100 of the invention is configured to also detect small leaks or seepages of a refrigerant fluid resulting from the malfunctioning of a safety valve which has already intervened. Indeed, the amount of air in the exhaust pipe 60, 70 installed downstream of the safety valve 40, 50 requires a small gas leak to saturate or reduce the percentage level of oxygen therein, with the consequence that the leak is detected in a short period of time. Moreover, since appliance 100 is installed at the output of one or a small group of safety valves, the area of the person requiring intervention by the maintenance operator may be identified.

The invention is defined by the appended independent claims. I

**Claims**

1. A monitoring appliance (100) for detecting leaks of a refrigerant fluid from a refrigeration circuit (150) of an industrial refrigeration system, comprising:

   - an electronic detection device (10) for detecting leaks of a refrigerant fluid;
   - a body (1) having a first portion (2) for accommodating the electronic detection device (10) for detecting leaks of a refrigerant fluid, said first portion (2) being connected to an opposite second portion (3) of the body, said second portion (3) of the body comprising mechanical connection means (30) configured to connect the monitoring appliance to an exhaust pipe (60; 70) of the refrigerant fluid, associated with at least one safety valve (40; 50) of the refrigeration system,
   wherein said electronic detection device (10) comprises:

      - an optical oxygen sensor (11) adapted to detect a decrease in an oxygen level below a first and a second preset threshold value inside the exhaust pipe, from a reference oxygen level value, caused by a leak of a refrigerant fluid from the safety valve (40; 50) into the exhaust pipe (60; 70);
      - an electronic control unit (12) connected to said optical oxygen sensor (11);
      - an electronic status switching unit (13) which can be activated by the electronic control unit (12) to switch from a first (OFF) to a second (ON) status to signal the detection of a decrease in the oxygen level in the exhaust pipe (60, 70) below said first or second preset threshold value,

   exceeding said first threshold value identifying a leak of a refrigerant fluid from the safety valve (40; 50) requiring the operating conditions of the valve to be monitored, exceeding said second threshold value identifying a leak of a refrigerant fluid from the safety valve (40; 50) requiring a valve replacement operation.

2. A monitoring appliance (100) for detecting leaks of a refrigerant fluid according to claim 1, wherein said first threshold value identifies a percentage decrease in the oxygen in the exhaust pipe (60, 70) of 5% in volume from the reference oxygen level value, caused by a leak of a refrigerant fluid from the safety valve (40; 50), said second threshold value identifies a percentage decrease in the oxygen in the exhaust pipe (60, 70) of 15% in volume from the reference oxygen level value, caused by a leak of a refrigerant fluid from the safety valve (40; 50).

3. A monitoring appliance (100) for detecting leaks of a refrigerant fluid according to claim 1, wherein said mechanical connection means (30) configured to connect the monitoring appliance to an exhaust pipe (60; 70) of the refrigerant fluid are reversible connection means.

4. A monitoring appliance (100) for detecting leaks of a refrigerant fluid according to claim 3, wherein said reversible mechanical connection means consist of a push-in connector (30) with threaded coupling associated with said connection portion (3) of the monitoring appliance.

5. A monitoring appliance (100) for detecting leaks of a refrigerant fluid according to claim 1, wherein said electronic status switching unit (13) of the electronic detection device (10) is selected from the group consisting of:

   - an electromechanical relay;
   - a P-channel power MOSFET transistor;
   - an N-channel power MOSFET transistor;
   - a solid state relay.

6. A monitoring appliance (100) for detecting leaks of a refrigerant fluid according to any one of the preceding claims, wherein said electronic detection device (10) further comprises a data communication unit (14) connected to the electronic control unit (12), for sending, out from the monitoring appliance, data representative of the performed detections of leaks of a refrigerant gas and for receiving, in the monitoring appliance, configuration instructions for operating parameters of the optical oxygen sensor (11).

7. A monitoring appliance (100) for detecting leaks of a refrigerant fluid according to claim 6, wherein said data communication unit (14) is a fieldbus line operating according to a communication protocol selected from the group consisting of: Modbus RTU, Modbus TCP, Profinet, Profibus, CAN bus.

8. A monitoring appliance (100) for detecting leaks of a refrigerant fluid according to any one of the preceding claims, wherein said electronic detection device (10) further comprises an analog current output unit (15) configured to connect the monitoring appliance to an external control system, said analog current output unit (15) comprising:

   - a 4mA output, representative of a 0% change in the amount of refrigerant gas detected;
   - a 20mA output, representative of a 100% change in the amount of refrigerant gas detected.

9. A monitoring appliance (100) for detecting leaks of a refrigerant fluid according to any one of the preceding claims, wherein said electronic detection device (10) further comprises an analog voltage output unit (16) configured to connect the monitoring appliance to an external control system, said analog voltage output unit (16) comprising:

   - a 0V output, representative of a 0% change in the amount of refrigerant gas detected;
   - a 10V output, representative of a 100% change in the amount of refrigerant gas detected.

10. A monitoring appliance (100) for detecting leaks of a refrigerant fluid according to claim 1, wherein said electronic detection device (10) further comprises visual signaling means (17) of an alarm which can be activated by the electronic control unit (12) following the detection of a leak of a refrigerant fluid in the pipe (60, 70) which is greater than the first threshold value (Warning) or greater than the second threshold value (Alarm).

11. A monitoring appliance (100) for detecting leaks of a refrigerant fluid according to claim 1, wherein said electronic detection device (10) comprises:

   - a first resettable fuse connected between an input voltage terminal ($V_{IN}$) and a voltage supply block (18) of the electronic detection device (10);
   - a first resistance connected between the electronic control unit (12) and said optical oxygen sensor (11);
   - a second fuse connected on an output line of the voltage supply block (18);
   - a second and a third resistance connected in series on a signal communication line which connects the electronic control unit (12) and the optical oxygen sensor (11).

12. A monitoring appliance (100) for detecting leaks of a refrigerant fluid according to claims 7-9, further comprising:

   - third resettable fuses associated with said analog voltage output unit (16) and the analog current output unit (15);
   - fourth resettable fuses associated with said data communication unit (14).

13. A safety valve assembly (200; 300) of an industrial refrigeration system, comprising:

   - a safety valve (40; 50) having an inlet (41; 51) connected to a refrigeration circuit of the industrial refrigeration system, and an outlet (42; 52) connected to an exhaust pipe (60; 70) of the refrigerant fluid;
   - a monitoring appliance (100) for detecting leaks of a refrigerant fluid according to at least one of claims 1-12;
   - first reversible mechanical connection means (61, 62; 71) associated with a first end (43; 53) of the exhaust pipe (60; 70) of the refrigerant fluid, adapted to reversibly engage said outlet (42; 52) of the safety valve (40; 50);
   - second reversible mechanical connection means (63, 64; 72) associated with a second end (44; 54) of the exhaust pipe (60; 70) of the refrigerant fluid, adapted to reversibly engage connection means (30) of the monitoring appliance (100).

14. A safety valve assembly (200) of an industrial refrigeration system according to claim 13, wherein:

   - said first reversible mechanical connection means (61, 62) associated with the first end (43) of the exhaust pipe of the refrigerant fluid comprise a first (61) and a second (62) push-in connector with threaded coupling;
   - said second reversible mechanical connection means (63, 64) associated with the second end (44) of the exhaust pipe of the refrigerant fluid comprise a third (63) and a fourth (64) push-in connector with threaded coupling.

15. A safety valve assembly (300) of an industrial refrigeration system according to claim 13, wherein:

   - said first reversible mechanical connection means (71) associated with the first end (53) of the exhaust pipe of the refrigerant fluid comprise a push-in connector with flanged coupling;
- said second reversible mechanical connection means (72) associated with the second end (54) of the exhaust pipe of the refrigerant fluid comprise a push-in connector with threaded coupling.

16. Use of a monitoring appliance (100) according to any one of claims 1-12, for detecting leaks of a refrigerant fluid from a refrigeration circuit (150) of an industrial refrigeration system.

**Patentansprüche**

1. Überwachungseinrichtung (100) zum Detektieren von Leckagen eines Kühlmittel-Fluids aus einem Kühlkreislauf (150) eines industriellen Kühlsystems, umfassend:

- eine elektronische Detektionsvorrichtung (10) zum Detektieren von Leckagen eines Kühlmittel-Fluids;
- einen Körper (1), welcher einen ersten Abschnitt (2) zum Aufnehmen der elektronischen Detektionsvorrichtung (10) zum Detektieren von Leckagen eines Kühlmittel-Fluids aufweist, wobei der erste Abschnitt (2) mit einem entgegengesetzten zweiten Abschnitt (3) des Körpers verbunden ist,
wobei der zweite Abschnitt (3) des Körpers mechanische Verbindungsmittel (30) umfasst, welche dazu eingerichtet sind, die Überwachungseinrichtung mit einem Auslassrohr (60; 70) des Kühlmittel-Fluids zu verbinden, zugeordnet wenigstens einem Sicherheitsventil (40; 50) des Kühlsystems,
wobei die elektronische Detektionsvorrichtung (10) umfasst:

- einen optischen Sauerstoffsensor (11), welcher dazu eingerichtet ist, eine Abnahme in einem Sauerstoffpegel unter einen ersten und einen zweiten vorbestimmten Schwellenwert innerhalb des Auslassrohrs von einem Referenz-Sauerstoffpegel-Wert zu detektieren, welche durch eine Leckage eines Kühlmittel-Fluids von dem Sicherheitsventil (40; 50) in das Auslassrohr (60; 70) hervorgerufen wird;
- eine elektronische Steuereinheit (12), welche mit dem optischen Sauerstoffsensor (11) verbunden ist;
- eine elektronische Status-Schalteinheit (13), welche durch die elektronische Steuereinheit (12) aktiviert werden kann, um von einem ersten (OFF) zu einem zweiten (ON) Status umzuschalten, um die Detektion einer Abnahme in dem Sauerstoffpegel in dem Auslassrohr (60, 70) unter den ersten oder zweiten vorbestimmten Schwellenwert zu signalisieren,

wobei ein Überschreiten des ersten Schwellenwerts eine Leckage eines Kühlmittel-Fluids von dem Sicherheitsventil (40; 50) identifiziert, welche verlangt, dass die Betriebsbedingungen des Ventils zu überwachen sind, wobei ein Überschreiten des zweiten Schwellenwerts eine Leckage eines Kühlmittel-Fluids von dem Sicherheitsventil (40; 50) identifiziert, welche einen Ventil-Ersetzungsvorgang verlangt.

2. Überwachungseinrichtung (100) zum Detektieren von Leckagen eines Kühlmittel-Fluids nach Anspruch 1, wobei der erste Schwellenwert eine prozentuale Abnahme in dem Sauerstoff in dem Auslassrohr (60, 70) von 5% im Volumen von dem Referenz-Sauerstoffpegel-Wert identifiziert, welche von einer Leckage eines Kühlmittel-Fluids von dem Sicherheitsventil (40; 50) hervorgerufen wird, wobei der zweite Schwellenwert eine prozentuale Abnahme in dem Sauerstoff in dem Auslassrohr (60, 70) von 15% im Volumen von dem Referenz-Sauerstoffpegel-Wert identifiziert, welche durch eine Leckage eines Kühlmittel-Fluids von dem Sicherheitsventil (40; 50) hervorgerufen wird.

3. Überwachungseinrichtung (100) zum Detektieren von Leckagen eines Kühlmittel-Fluids nach Anspruch 1, wobei die mechanischen Verbindungsmittel (30), welche dazu eingerichtet sind, die Überwachungseinrichtung mit einem Auslassrohr (60; 70) des Kühlmittel-Fluids zu verbinden, reversible Verbindungsmittel sind.

4. Überwachungseinrichtung (100) zum Detektieren von Leckagen eines Kühlmittel-Fluids nach Anspruch 3, wobei die reversiblen mechanischen Verbindungsmittel aus einem Einsteck-Verbindungselement (30) mit einer Gewindekopplung dem Verbindungsabschnitt (3) der Überwachungseinrichtung zugeordnet bestehen.

5. Überwachungseinrichtung (100) zum Detektieren von Leckagen eines Kühlmittel-Fluids nach Anspruch 1, wobei die elektronische Status-Schalteinheit (13) der elektronischen Detektionsvorrichtung (10) aus der Gruppe ausgewählt ist, bestehend aus:

- einem elektromechanischen Relais;

- einem P-Kanal-MOSFET-Leistungstransistor;
- einem N-Kanal-MOSFET-Leistungstransistor;
- einem Festkörper-Relais.

6. Überwachungseinrichtung (100) zum Detektieren von Leckagen eines Kühlmittel-Fluids nach einem der vorhergehenden Ansprüche, wobei die elektronische Detektionsvorrichtung (10) ferner eine Daten-Kommunikationseinheit (14) umfasst, welche mit der elektronischen Steuereinheit (12) verbunden ist, um aus der Überwachungseinrichtung Daten zu senden, welche die durchgeführten Detektionen von Leckagen eines Kühlmittel-Gases repräsentieren, sowie zum Empfangen von Konfigurationsanweisungen für Betriebsparameter des optischen Sauerstoffsensors (11) in der Überwachungseinrichtung.

7. Überwachungseinrichtung (100) zum Detektieren von Leckagen eines Kühlmittel-Fluids nach Anspruch 6, wobei die Daten-Kommunikationseinheit (14) eine Feldbus-Leitung ist, welche gemäß einem Kommunikationsprotokoll arbeitet, welches aus der Gruppe ausgewählt ist, bestehend aus: Modbus-RTU, Modbus-TCP, Profinet, Profibus, CAN-Bus.

8. Überwachungseinrichtung (100) zum Detektieren von Leckagen eines Kühlmittel-Fluids nach einem der vorhergehenden Ansprüche, wobei die elektronische Detektionsvorrichtung (10) ferner eine analoge Stromausgabe-Einheit (15) umfasst, welche dazu eingerichtet ist, die Überwachungseinrichtung mit einem externen Steuersystem zu verbinden, wobei die analoge Stromausgabe-Einheit (15) umfasst:

   - eine 4mA-Ausgabe, welche eine 0%-Änderung in der Menge eines detektierten Kühlmittel-Gases repräsentiert;
   - eine 20mA-Ausgabe, welche eine 100%-Änderung in der Menge eines detektierten Kühlmittel-Gases repräsentiert.

9. Überwachungseinrichtung (100) zum Detektieren von Leckagen eines Kühlmittel-Fluids nach einem der vorhergehenden Ansprüche, wobei die elektronische Detektionsvorrichtung (10) eine analoge Spannungsausgabe-Einheit (16) umfasst, welche dazu eingerichtet ist, die Überwachungseinrichtung mit einem externen Steuersystem zu verbinden, wobei die analoge Spannungsausgabe-Einheit (16) umfasst:

   - eine 0V-Ausgabe, welche eine 0%-Änderung in der Menge eines detektierten Kühlmittel-Gases repräsentiert;
   - eine 10V-Ausgabe, welche eine 100%-Änderung in der Menge eines detektierten Kühlmittel-Gases repräsentiert.

10. Überwachungseinrichtung (100) zum Detektieren von Leckagen eines Kühlmittel-Fluids nach Anspruch 1, wobei die elektronische Detektionsvorrichtung (10) ferner visuelle Signalmittel (17) eines Alarms umfasst, welche durch die elektronische Steuervorrichtung (12) auf die Detektion einer Leckage eines Kühlmittel-Fluids in dem Rohr (60, 70) folgend aktiviert werden können, welche größer als der erste Schwellenwert (Warnung) oder größer als der zweite Schwellenwert (Alarm) ist.

11. Überwachungseinrichtung (100) zum Detektieren von Leckagen eines Kühlmittel-Fluids nach Anspruch 1, wobei die elektronische Detektionsvorrichtung (10) umfasst:

   - eine erste zurücksetzbare Sicherung, welche zwischen einem Eingangsspannung-Anschluss ($V_{in}$) und einem Spannung-Versorgungsblock (18) der elektronischen Detektionsvorrichtung (10) verbunden ist;
   - einen ersten Widerstand, welcher zwischen der elektronischen Steuereinheit (12) und dem optischen Sauerstoffsensor (11) verbunden ist;
   - eine zweite Sicherung, welche mit einer Ausgangsleitung des Spannung-Versorgungsblocks (18) verbunden ist;
   - einen zweiten und einen dritten Widerstand, welche in Reihe an einer Signal-Kommunikationsleitung verbunden sind, welche die elektronische Steuereinheit (12) und den optischen Sauerstoffsensor (11) verbindet.

12. Überwachungseinrichtung (100) zum Detektieren von Leckagen eines Kühlmittel-Fluids nach den Ansprüchen 7-9, ferner umfassend:

   - dritte zurücksetzbare Sicherungen, welche der analogen Spannung-Ausgebeeinheit (16) und der analogen Strom-Ausgabeeinheit (15) zugeordnet sind;
   - vierte zurücksetzbare Sicherungen, welche der Daten-Kommunikationseinheit (14) zugeordnet sind.

**13.** Sicherheitsventil-Anordnung (200; 300) eines industriellen Kühlsystems, umfassend:

- ein Sicherheitsventil (40; 50), welches einen Einlass (41; 51), welcher mit einem Kühlkreislauf des industriellen Kühlsystems verbunden ist, und einen Auslass (42; 52) aufweist, welcher mit einem Auslassrohr (60; 70) des Kühlmittel-Fluids verbunden ist;
- eine Überwachungseinrichtung (100) zum Detektieren von Leckagen eines Kühlmittel-Fluids nach wenigstens einem der Ansprüche 1-12;
- erste umkehrbare mechanische Verbindungsmittel (61, 62; 71), welche einem ersten Ende (43; 53) des Auslassrohrs (60; 70) des Kühlmittel-Fluids zugeordnet sind, welche dazu eingerichtet sind, umkehrbar mit dem Auslass (42; 52) des Sicherheitsventils (40; 50) einzugreifen;
- zweite umkehrbare mechanische Verbindungsmittel (63, 64; 72), welche einem zweiten Ende (44; 54) des Auslassrohrs (60; 70) des Kühlmittel-Fluids zugeordnet sind, welche dazu eingerichtet sind, umkehrbar mit Verbindungsmitteln (30) der Überwachungseinrichtung (100) einzugreifen.

**14.** Sicherheitsventil-Anordnung (200) eines industriellen Kühlsystems nach Anspruch 13, wobei:

- die ersten umkehrbaren mechanischen Verbindungsmittel (61, 62), welche dem ersten Ende (43) des Auslassrohrs des Kühlmittel-Fluids zugeordnet sind, ein erstes (61) und ein zweites (62) Einsteck-Verbindungselement mit Gewindekopplung umfassen;
- die zweiten umkehrbaren mechanischen Verbindungsmittel (63, 64), welche dem zweiten Ende (44) des Auslassrohrs des Kühlmittel-Fluids zugeordnet sind, ein drittes (63) und ein viertes (64) Einsteck-Verbindungselement mit Gewindekopplung umfassen.

**15.** Sicherheitsventil-Anordnung (300) eines industriellen Kühlsystems nach Anspruch 13, wobei:

- die ersten umkehrbaren mechanischen Verbindungsmittel (71), welche dem ersten Ende (53) des Auslassrohrs des Kühlmittel-Fluids zugeordnet sind, ein Einsteck-Verbindungselement mit Flanschkopplung umfassen;
- die zweiten umkehrbaren mechanischen Verbindungsmittel (72), welche dem zweiten Ende (54) des Auslassrohrs des Kühlmittels zugeordnet sind, ein Einsteck-Verbindungselement mit Gewindekopplung umfassen.

**16.** Verwendung einer Überwachungseinrichtung (100) nach einem der Ansprüche 1-12 für ein Detektieren von Leckagen eines Kühlmittel-Fluids von einem Kühlkreislauf (150) eines industriellen Kühlsystems.

**Revendications**

**1.** Dispositif de surveillance (100) pour détecter des fuites d'un fluide frigorigène d'un circuit de réfrigération (150) d'un système de réfrigération industriel, comprenant :

- un dispositif électronique de détection (10) destiné à détecter des fuites d'un fluide frigorigène ;
- un corps (1) présentant une première partie (2) permettant de loger le dispositif électronique de détection (10) destiné à détecter des fuites d'un fluide frigorigène, ladite première partie (2) étant connectée à une deuxième partie opposée (3) du corps,
ladite deuxième partie (3) du corps comprenant des moyens de liaison mécaniques (30) configurés pour relier le dispositif de surveillance à un tuyau d'échappement (60 ; 70) du fluide frigorigène, associés à au moins une soupape de sécurité (40 ; 50) du système de réfrigération,
dans lequel ledit dispositif électronique de détection (10) comprend :

- un capteur optique d'oxygène (11) adapté pour détecter une diminution d'un niveau d'oxygène sous une première et une deuxième valeurs de seuil prédéfinies à l'intérieur du tuyau d'échappement, depuis une valeur de niveau d'oxygène de référence, causée par une fuite d'un fluide frigorigène depuis la soupape de sécurité (40 ; 50) dans le tuyau d'échappement (60 ; 70) ;
- une unité électronique de commande (12) connectée audit capteur optique d'oxygène (11) ;
- une unité électronique de commutation d'état (13) qui peut être activée par l'unité électronique de commande (12) pour commuter d'un premier état (ARRÊT) à un deuxième état (MARCHE) pour signaler la détection d'une diminution du niveau d'oxygène dans le tuyau d'échappement (60, 70) sous ladite première ou deuxième valeur de seuil prédéfinie,

le passage sous ladite première valeur de seuil identifiant une fuite d'un fluide frigorigène depuis la soupape de sécurité (40 ; 50) requérant la surveillance des conditions opérationnelles de la soupape, le passage sous ladite deuxième valeur de seuil identifiant une fuite d'un fluide frigorigène de la soupape de sécurité (40 ; 50) requérant une opération de remplacement de soupape.

**2.** Dispositif de surveillance (100) pour détecter des fuites d'un fluide frigorigène selon la revendication 1, dans lequel ladite première valeur de seuil identifie une diminution, en pourcentage, de l'oxygène dans le tuyau d'échappement (60, 70) de 5 % en volume depuis la valeur de niveau d'oxygène de référence, causée par une fuite d'un fluide frigorigène depuis la soupape de sécurité (40 ; 50), ladite deuxième valeur de seuil identifie une diminution, en pourcentage, de l'oxygène dans le tuyau d'échappement (60, 70) de 15 % en volume depuis la valeur de niveau d'oxygène de référence, causée par une fuite d'un fluide frigorigène depuis la soupape de sécurité (40 ; 50).

**3.** Dispositif de surveillance (100) pour détecter des fuites d'un fluide frigorigène selon la revendication 1, dans lequel lesdits moyens de liaison mécaniques (30) configurés pour relier le dispositif de surveillance à un tuyau d'échappement (60 ; 70) du fluide frigorigène sont des moyens de liaison réversibles.

**4.** Dispositif de surveillance (100) pour détecter des fuites d'un fluide frigorigène selon la revendication 3, dans lequel lesdits moyens de liaison mécaniques réversibles se composent d'un connecteur enfichable (30) avec couplage fileté associé à ladite partie de liaison (3) du dispositif de surveillance.

**5.** Dispositif de surveillance (100) pour détecter des fuites d'un fluide frigorigène selon la revendication 1, dans lequel ladite unité électronique de commutation d'état (13) du dispositif électronique de détection (10) est sélectionnée dans le groupe constitué de :

- un relais électromécanique ;
- un transistor de puissance MOSFET à canal P ;
- un transistor de puissance MOSFET à canal N ;
- un relais à semi-conducteur.

**6.** Dispositif de surveillance (100) pour détecter des fuites d'un fluide frigorigène selon l'une quelconque des revendications précédentes, dans lequel ledit dispositif électronique de détection (10) comprend en outre une unité de communication de données (14) connectée à l'unité électronique de commande (12), pour envoyer, hors du dispositif de surveillance, des données représentant des détections réalisées de fuites d'un gaz frigorigène, et pour recevoir, dans le dispositif de surveillance, des instructions de configuration pour les paramètres opérationnels du capteur optique d'oxygène (11).

**7.** Dispositif de surveillance (100) pour détecter des fuites d'un fluide frigorigène selon la revendication 6, dans lequel ladite unité de communication de données (14) est une ligne de bus de champ fonctionnant selon un protocole de communication sélectionné dans le groupe constitué de : Modbus RTU, Modbus TCP, Profinet, Profibus, bus CAN.

**8.** Dispositif de surveillance (100) pour détecter des fuites d'un fluide frigorigène selon l'une quelconque des revendications précédentes, dans lequel ledit dispositif électronique de détection (10) comprend en outre une unité de sortie en courant analogique (15) configurée pour connecter le dispositif de surveillance à un système de commande externe, ladite unité de sortie en courant analogique (15) comprenant :

- une sortie 4 mA représentant un changement de 0 % de la quantité de gaz frigorigène détectée ;
- une sortie 20 mA représentant un changement de 100 % de la quantité de gaz frigorigène détectée.

**9.** Dispositif de surveillance (100) pour détecter des fuites d'un fluide frigorigène selon l'une quelconque des revendications précédentes, dans lequel ledit dispositif électronique de détection (10) comprend en outre une unité de sortie en tension analogique (16) configurée pour connecter le dispositif de surveillance à un système de commande externe, ladite unité de sortie en tension analogique (16) comprenant :

- une sortie 0 V représentant un changement de 0 % de la quantité de gaz frigorigène détectée ;
- une sortie 10 V représentant un changement de 100 % de la quantité de gaz frigorigène détectée.

**10.** Dispositif de surveillance (100) pour détecter des fuites d'un fluide frigorigène selon la revendication 1, dans lequel ledit dispositif électronique de détection (10) comprend en outre des moyens de signalisation visuelle (17) d'une alarme qui peut être activée par l'unité électronique de commande (12) suite à la détection d'une fuite d'un fluide frigorigène dans le tuyau (60, 70) qui est supérieure à la première valeur de seuil (avertissement) ou supérieure à la deuxième valeur de seuil (alarme).

11. Dispositif de surveillance (100) pour détecter des fuites d'un fluide frigorigène selon la revendication 1, dans lequel ledit dispositif électronique de détection (10) comprend :

- un premier fusible réinitialisable connecté entre une borne de tension d'entrée ($V_{IN}$) et un bloc d'alimentation en tension (18) du dispositif électronique de détection (10) ;
- une première résistance connectée entre l'unité électronique de commande (12) et ledit capteur optique d'oxygène (11) ;
- un deuxième fusible connecté sur une ligne de sortie du bloc d'alimentation en tension (18) ;
- une deuxième et une troisième résistances connectées en série sur une ligne de communication de signal qui relie l'unité électronique de commande (12) et le capteur optique d'oxygène (11).

12. Dispositif de surveillance (100) pour détecter des fuites d'un fluide frigorigène selon les revendications 7 à 9, comprenant en outre :

- des troisièmes fusibles réinitialisables associés à ladite unité de sortie en tension analogique (16) et à l'unité de sortie en courant analogique (15) ;
- des quatrièmes fusibles réinitialisables associés à ladite unité de communication de données (14).

13. Ensemble de soupape de sécurité (200 ; 300) d'un système de réfrigération industriel, comprenant :

- une soupape de sécurité (40 ; 50) présentant une entrée (41 ; 51) connectée à un circuit de réfrigération du système de réfrigération industriel, et une sortie (42 ; 52) connectée à un tuyau d'échappement (60 ; 70) du fluide frigorigène ;
- un dispositif de surveillance (100) pour détecter des fuites d'un fluide frigorigène selon au moins l'une des revendications 1 à 12 ;
- des premiers moyens de liaison mécaniques réversibles (61, 62 ; 71) associés à une première extrémité (43 ; 53) du tuyau d'échappement (60 ; 70) du fluide frigorigène, adaptés pour engager de manière réversible ladite sortie (42 ; 52) de la soupape de sécurité (40 ; 50) ;
- des deuxièmes moyens de liaison mécaniques réversibles (63, 64 ; 72) associés à une deuxième extrémité (44 ; 54) du tuyau d'échappement (60 ; 70) du fluide frigorigène, adaptés pour engager de manière réversible des moyens de liaison (30) du dispositif de surveillance (100).

14. Ensemble de soupape de sécurité (200) d'un système de réfrigération industriel selon la revendication 13, dans lequel :

- lesdits premiers moyens de liaison mécaniques réversibles (61, 62) associés à la première extrémité (43) du tuyau d'échappement du fluide frigorigène comprennent un premier (61) et un deuxième (62) connecteurs enfichables avec couplage fileté ;
- lesdits deuxièmes moyens de liaison mécaniques réversibles (63, 64) associés à la deuxième extrémité (44) du tuyau d'échappement du fluide frigorigène comprennent un troisième (63) et un quatrième (64) connecteurs enfichables avec couplage fileté.

15. Ensemble de soupape de sécurité (300) d'un système de réfrigération industriel selon la revendication 13, dans lequel :

- lesdits premiers moyens de liaison mécaniques réversibles (71) associés à la première extrémité (53) du tuyau d'échappement du fluide frigorigène comprennent un connecteur enfichable avec couplage à brides ;
- lesdits deuxièmes moyens de liaison mécaniques réversibles (72) associés à la deuxième extrémité (54) du tuyau d'échappement du fluide frigorigène comprennent un connecteur enfichable avec couplage fileté.

16. Utilisation d'un dispositif de surveillance (100) selon l'une quelconque des revendications 1 à 12 pour détecter des fuites d'un fluide frigorigène d'un circuit de réfrigération (150) d'un système de réfrigération industriel.

FIG. 1

FIG. 2

EP 4 172 539 B1

FIG. 3

FIG. 4

EP 4 172 539 B1

FIG. 5

EP 4 172 539 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- A robust and reliable optical trace oxygen sensor. **MCDOWELL G R et al.** PROCEEDINGS OF SPIE; [PROCEEDINGS OF SPIE ISSN. SPIE, 16 May 2017, vol. 10524, 10231